# EUROPÄISCHE PATENTSCHRIFT

(11) **EP 2 483 136 B1**
(45) Veröffentlichungstag und Bekanntmachung des Hinweises auf die Patenterteilung: **03.09.2014**
(21) Anmeldenummer: 10760930.7
(22) Anmeldetag: 27.09.2010
(51) Int. Cl.: B62D 21/15, B62D 25/20, B62D 27/02, B62D 29/00

(54) **FAHRZEUGKAROSSERIEAUFBAU MIT EINER KAROSSERIEVERSTEIFUNG HINTER DER ZWEITEN SITZREIHE**
VEHICLE BODY STRUCTURE HAVING A BODY REINFORCEMENT BEHIND THE SECOND ROW OF SEATS
STRUCTURE DE CARROSSERIE DE VÉHICULE PRÉSENTANT UN RENFORCEMENT DE CARROSSERIE DERRIÈRE LA SECONDE RANGÉE DE SIÈGES

(30) Priorität: 30.09.2009 DE 102009047810
(43) Veröffentlichungstag der Anmeldung: 08.08.2012
(73) Patentinhaber: Audi AG, 85045 Ingolstadt (DE)
(72) Erfinder: KÜHL, Sönke, 69120 Heidelberg (DE); CARLE, Klaus-Dieter, 74074 Heilbronn (DE); URBAN, Tobias, 74354 Besigheim (DE); THAYSEN, Oliver, 85049 Ingolstadt (DE)
(74) Vertreter: Engelhardt, Harald
(86) Internationale Anmeldenummer: PCT/EP2010/005887
(87) Internationale Veröffentlichungsnummer: WO 2011/038877

(56) Entgegenhaltungen:
- EP-A1- 1 129 929
- EP-A1- 1 693 284
- DE-A1- 10 302 756
- DE-A1- 19 708 215
- DE-A1- 19 954 575
- DE-A1-102004 014 664
- DE-A1-102006 052 992

## Beschreibung

Die Erfindung betrifft einen Fahrzeugkarosserieaufbau mit einer Karosserieversteifung hinter der zweiten Sitzreihe nach dem Oberbegriff des Anspruchs 1.

Eine solche Karosserieversteifung ist aus der DE 10 2004 014 664 A1 bekannt und besteht aus einem Trägerverbund, der aus zwei gegenüberliegenden Seitenlängsträgern, einem Bodenquerträger und zwei Seitenvertikalträgern gebildet ist. Dabei sind jeweils ein linksseitiger Seitenlängsträger, ein zugeordnetes linkes Ende des Bodenquerträgers und ein linksseitiger Seitenvertikalträger an einem linksseitigen Knotenpunkt verbunden. Entsprechend ist der zweite rechtsseitige Längsträger mit dem rechtsseitigen Ende des Bodenquerträgers und dem zweiten rechtsseitigen Seitenvertikalträger an einem rechtsseitigen Knotenpunkt verbunden. Für eine verstärkte Aussteifung in der Querebene des Bodenquerträgers und der Seitenvertikalträger, werden zudem an den beiden Knotenpunkten Eckverstärkungen angebracht. Die Seitenlängsträger sind hier durch Strangpress-Bauteile gebildet.

Solche Eckverstärkungen an den bodenseitigen Knotenpunkten sind für eine Karosserieversteifung im hinteren Karosseriebereich insbesondere gegen betriebsmäßige Karosserieverwindungen und als Schutzmaßnahme gegen einen Seitencrash gut geeignete und allgemein bekannte Maßnahmen. Beispielsweise ist aus der DE 10 2004 027 377 A1 eine Anordnung mit einem Bodenquerträger bekannt, der jeweils endseitig mit einer Eckverstärkung über einen Seitenlängsträger geführt ist und weiter zu einem kurzen Seitenvertikalträgerelement nach oben gebogen und mit einem Radhausträger verbunden ist.

Weiter ist es allgemein bekannt bei Limousinen-Karosserien für Fahrzeuge mit einer umklappbaren Rückbanklehne die Steifigkeit der Karosserie im Bereich der hinteren Radhäuser und der Hutablage dadurch zu verbessern, dass der gattungsgemäße Trägerverbund durch einen oberen Querträger im Bereich der Hutablage zu einem Torsionsring geschlossen ist. Auch hier werden in bekannter Weise Eckverstärkungen der bodenseitigen Knotenpunkte so ausgeführt, dass eckverstärkende Blechwinkel für eine Materialverstärkung eingeschweißt werden.

Eine ähnliche Blechwinkelverstärkung wird auch in allgemein bekannter Weise bei Kombifahrzeugen durchgeführt, wobei hier als Seitenvertikalträger, die bis in den Dachbereich geführten C-Säulen verwendet sind, sodass auch hier ein geschlossener Torsionsring über die Dachkonstruktion hergestellt ist.

Die aus der DE 10 2004 027 377 A1 bekannte Trägerverbundanordnung hat wegen der kurzen Seitenvertikalträger-Anbindung an die Radhäuser nur eine geringe torsionsreduzierende Wirkung. Zudem sind alle vorstehend zum Stand der Technik angegebenen Trägerverbundanordnungen relativ aufwändig in der Herstellung und der Montage, insbesondere bei Verwendung separater Eckverstärkungsteile. Weiter handelt es sich jeweils um einen konventionellen Stahlblech-Karosseriebau, ohne spezielle Maßnahmen für eine Gewichtsreduzierung.

Bei allgemein bekannten modernen Fahrzeugkarosserien kommen jedoch zusätzlich zu strömungsgünstigen Gestaltungen zunehmend Werkstoffe aus Leichtmetallen oder Leichtmetalllegierungen, insbesondere aus Aluminium zum Einsatz, um durch Gewichtseinsparungen umweltschonend den Kraftstoffverbrauch zu reduzieren. Die Steifigkeiten und Fügetechnologien für Leichtmetallbauteile unterscheiden sich vom bisherigen konventionellen, ausschließlichen Stahlblechbau, so dass dadurch auftretende Probleme mit einem auf die jeweilige Karosseriestelle genau abgestimmten Werkstoff-Mix bei entsprechender Kombination von Bauteilen sowie mit kostengünstigen und geeigneten Fügetechniken für einen Großserieneinsatz zu lösen sind.

Aufgabe der Erfindung ist es einen gattungsgemäßen Fahrzeugkarosserieaufbau mit einer Karosserieversteifung hinter der zweiten Sitzreihe so weiterzubilden, dass ein kosten- und gewichtsgünstiger Aufbau mit hoher Steifigkeit erhalten wird.

Diese Aufgabe wird dadurch gelöst, dass die Seitenlängsträger Aluminiumguss-Seitenlängsträger sind, an denen jeweils am Knotenpunkt eine Eckverstärkung als materialeinheitliches, kastenartig abragendes Eckverstärkungsprofil ausgeformt und integriert ist. An jeden der beiden Eckverstärkungsprofile ist jeweils oben einerseits der zugeordnete Seitenvertikalträger und seitlich andererseits das zugeordnete Ende des Bodenquerträgers angeschlossen.

Durch die Verwendung eines Aluminiumguss-Seitenlängsträgers ergibt sich ein gewichtsgünstiger Aufbau der den Einbau- und Steifigkeitserfordernissen einfach und gut anpassbar ist. Zudem kann in einem solchen Gussteil einfach und kostengünstig ein Eckverstärkungsprofil ausgeformt und integriert werden, ohne dass hier zusätzliche und zusätzlich zu montierende Eckverstärkungsteile erforderlich sind. Durch den unmittelbaren Anschluss des Bodenquerträgers und eines Seitenvertikalträgers an einem Eckverstärkungsprofil wird auch eine einfache und stabile Fügetechnik zur Verfügung gestellt, so dass die gesamte Trägerverbundanordnung für die Karosserieaussteifung hinter der zweiten Sitzreihe im Bereich der hinteren Radhäuser bei guter Versteifungsfunktion besonders gewichts- und kostengünstig ist.

Im Karosseriebau werden derzeit als Leichtbaumaterialien für Guss- und Blechelemente fast ausschließlich Aluminiumlegierungen eingesetzt, wobei solche Teile verkürzt als Alu- oder Aluminiumteile wie auch in der vorliegenden Anmeldung bezeichnet werden. Sollten in Zukunft auch andere gut geeignete Leichtbaumaterialien, wie beispielsweise geeignete Magnesiumlegierungen verfügbar sein, soll der vorstehende Wortlaut auch solche Materialien abdecken und vom Schutz umfasst sein.

In einer besonders bevorzugten konkreten Ausführungsform weist ein Aluminiumguss-Seitenlängsträger jeweils ein zur Fahrzeuginnenseite liegendes Aluminiumguss-Trägerschalenteil auf, an dem das Eckverstärkungsprofil als hohler, in den Fahrzeuginnenraum vorspringender Profilkasten ausgeformt ist. Der Profilkasten weist dabei, der zu verstärkenden Eckgestalt folgend, eine etwa dreieckige Grundform auf, mit in Fahrzeuglängsrichtung gegenüberliegenden etwa dreieckartigen Kastenquerwänden, einer Kastenoberwand, einer Kastenseitenwand und einem konkav geformten Übergangsbereich.

Ein zur Fahrzeuginnenseite liegendes Seitenvertikalträger-Schalenteil ist mit einem Überlappungsstoß im Bereich der Kastenoberwand formschlüssig übergreifend oder alternativ einen dortigen etwa U-förmigen Flansch hintergreifend angeschlossen. Entsprechend ist ein zur Fahrzeuginnenseite liegendes Bodenquerträger-Schalenteil mit einem Überlappungsstoß im Bereich der Kastenseitenwand formschlüssig übergreifend am Profilkasten angeschlossen. Das Bodenquerträger-Schalenteil ist bei der fertig montierten Karosserie durch das Bodenblech zu einem Bodenquerträger als Hohlträger geschlossen. Ähnlich sind die Seitenvertikalträger-Schalenteile durch Fahrzeugaußenbleche zu Hohlträgern geschlossen.

Durch den vorstehenden jeweils in einem Aluminiumguss-Trägerschalenteil ausgeformten Profilkasten wird in Verbindung mit der angegebenen Anschluss- und Fügetechnik eine besonders einfache und kostengünstig in Gießtechnik herstellbare Eckverstärkung zur Verfügung gestellt, wobei zudem das Schalenteil unter Verwendung von Verstärkungsrippen besonders gewichtsgünstig mit relativ geringen Wandstärken mit der erforderlichen Steifigkeit herstellbar ist.

Zusätzlich kann eine Gewichtsreduzierung bei Vermeidung von Kontaktkorrosionen erzielt werden, wenn auch der Bodenquerträger, beziehungsweise ein Bodenquerträger-Schalenteil und jeweils der Seitenvertikalträger, beziehungsweise ein Seitenvertikalträger-Schalenteil aus Aluminiumblech hergestellt sind. Dabei werden die Trägerverbindungen mit dem Eckverstärkungsprofil vorteilhaft durch Kleben und/oder Nieten gestellt. Mögliche Fügeverfahren zur Verbindung der Karosserieteile sind weiter MIG-Schweißen und FDS-Schrauben, für die vorteilhaft die Verbindungsstelle nur einseitig zugänglich sein muss.

Der beanspruchte Trägerverbund kann bei Limousinen-Karosserien, insbesondere bei Fahrzeugen mit klappbaren Rückbanklehnen, durch einen oberen Querträger im Bereich einer Hutablage zu einem bodeneckverstärkten Torsionsring mit ausgezeichneten Steifigkeitseigenschaften geschlossen werden. Auch bei Kombifahrzeug-Karosserien kann mit dem beanspruchten Trägerverbund eine ausgezeichnete Torsionsaussteifung erhalten werden, wobei dann zweckmäßig die Seitenvertikalträger Bestandteile der bis in den Dachbereich geführten C-Säulen sind.

Anhand einer Zeichnung wird ein Ausführungsbeispiel der Erfindung erläutert.

Es zeigen:
- Fig. 1: eine perspektivische Draufsicht einer Teilkarosserie mit einer Karosserieversteifung hinter einer zweiten Sitzreihe,
- Fig. 2: eine vergrößerte Darstellung des Bereichs A aus Fig. 1, und
- Fig. 3: eine Ansicht von seitlich unten auf den Gegenstand nach Fig. 2, entsprechend der Blickrichtung B, und
- Fig. 4: eine Darstellung entsprechend Fig. 2 einer alternativen Ausführungsform.

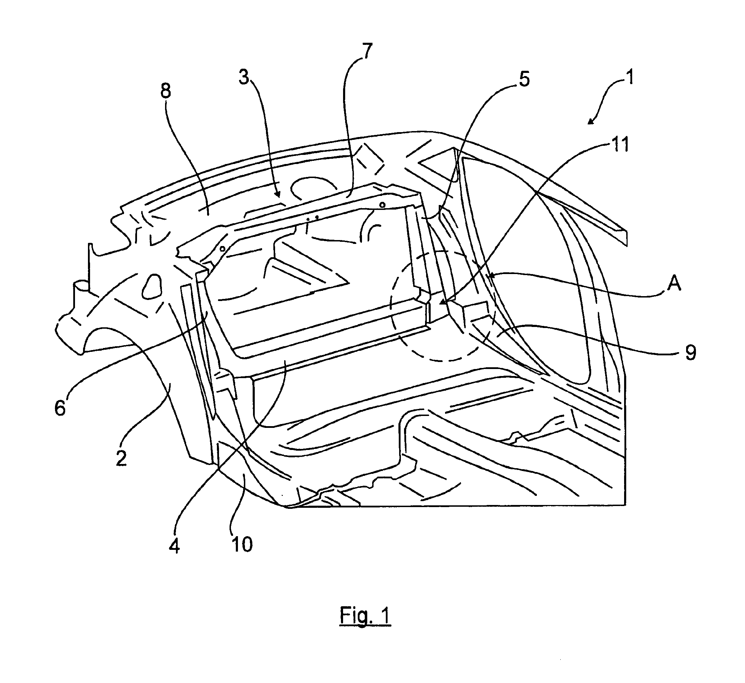

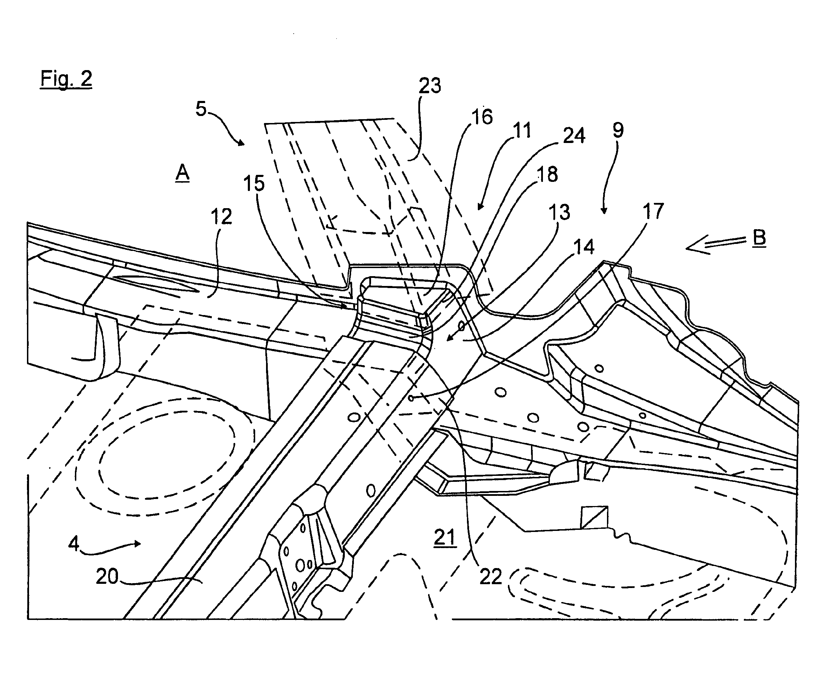

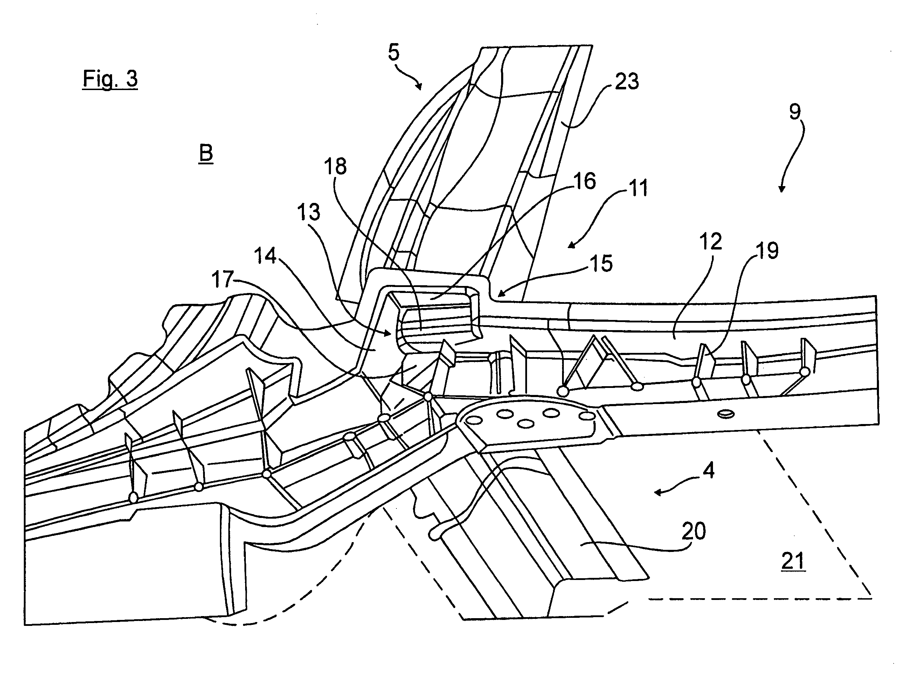

In Fig. 1 ist der rückwärtige Bereich einer Teilkarosserie 1 für ein Limousinenfahrzeug mit umklappbarer Rückbanklehne zur Vergrößerung eines Laderaums dargestellt. Im Bereich zwischen gegenüberliegenden Radhäusern 2 liegt hier zur Versteifung der Karosserie 1 in einer etwa vertikalen Querebene ein Torsionsring 3. Dieser Torsionsring 3 besteht aus einem Bodenquerträger 4, einem linksseitigen Seitenvertikalträger 5 und einem rechtsseitigen Seitenvertikalträger 6 sowie einem die Seitenvertikalträger 5, 6 verbindenden oberen Querträger 7 im Bereich und in der Höhe einer Hutablage 8. Zudem ist der Torsionsring 7 an den bodenseitigen Eckbereichen an einen linksseitigen Seitenlängsträger 9 und einen rechtsseitigen Seitenlängsträger 10 jeweils an einem Knotenpunkt 11 angeschlossen. Der linksseitige Knotenpunkt 11, entsprechend dem Bereich A in Fig. 1, wird anhand der Figuren 2 und 3 im Detail dargestellt:

Die Fig. 2 stellt dabei eine vergrößerte Ansicht des Bereichs A aus Fig. 1 dar und die Fig. 3 eine Ansicht auf den Gegenstand nach Fig. 2 von seitlich unten, mit einer Blickrichtung entsprechend etwa dem Pfeil B aus Fig. 2. Der Seitenlängsträger 9 weist ein mit seiner Schalenaußenfläche zur Fahrzeuginnenseite liegendes Aluminiumguss-Trägerschalenteil 12 auf, welches längs an der linken Fahrzeugaußenseite verläuft und bei der fertigen Karosserie mit einem Außenblech zu einem geschlossenen Längshohlträger ergänzt ist. Am Aluminiumguss-Trägerschalenteil 12 ist im Querbereich des Torsionsrings 3 ein in den Fahrzeuginnenraum vorspringender, hohler Profilkasten 13 als Eckverstärkungsprofil ausgeformt.

Der Profilkasten 13 weist etwa eine L-förmige Kastengrundform auf, mit zwei gegenüberliegenden dreieckartigen Kastenquerwänden 14, 15, einer Kastenoberwand 16, einer Kastenseitenwand 17 sowie einer konkav geformten Übergangswand 18 zwischen der Kastenoberwand 16 und der Kastenseitenwand 17. Aus der Ansicht nach Fig. 3 ist zudem ersichtlich, dass das Aluminiumguss-Trägerschalenteil 12 im Innenbereich mit geeignet angebrachten Verstärkungsrippen 19 zum Erhalt der erforderlichen Steifigkeit verstärkt ist.

Der Bodenquerträger 4 weist ein Bodenquerträger-Schalenteil 20 auf, welches zur Ausbildung eines Hohlträgers auf ein Bodenblech 21 aufgesetzt ist. Das Bodenquerträger-Schalenteil 20 übergreift endseitig formschlüssig mit einem Überlappungsstoß 22 den Bereich der Kastenseitenwand 17 und ist dort durch Kleben und Nieten angeschlossen. Ähnlich übergreift ein Seitenvertikalträger-Schalenteil 23 des Seitenvertikalträgers 5 formschlüssig mit einem Überlappungsstoß 24 den Bereich der Kastenoberwand 16 und ist dort ebenfalls durch Kleben und Nieten angeschlossen. Das Bodenquerträger-Schalenteil 20 und die Seitenvertikalträger-Schalenteile 23 sind aus Aluminiumblech hergestellt.

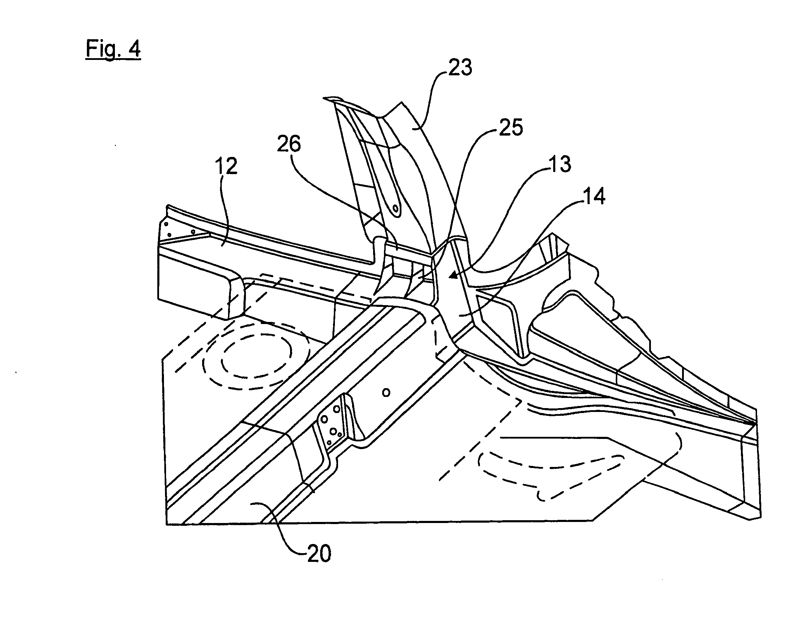

Die alternative Ausführungsform gemäß Fig. 4 entspricht weitgehend der vorstehenden Ausführungsform, so dass für gleiche Teile gleiche Bezugszeichen verwendet werden. Der Profilkasten 13 ist hier jedoch anders gestaltet, wobei anstelle der Übergangswand 18 das Kastenprofil hier zur Fahrzeuginnenseite hin offen ist und einen mittleren Stützsteg 25 aufweist. Zudem ist der Anschluss des Seitenvertikalträger-Schalenteils 23 anders als in der ersten Ausführungsform ausgeführt:

Hier hintergreift von außen her das Seitenvertikalträger-Schalenteil 23 mit seinem unteren Ende formschlüssig im Bereich der Kastenoberwand in einer Art Steckverbindung eine U-förmige Flanschstruktur 26. Mit dieser zweiten Variante können sich gegebenenfalls Vorteile beim Zusammenbau der Karosserie ergeben, Die Wirkungsweise ist grundsätzlich die gleiche wie bei der ersten Ausführungsform.

## Patentansprüche

1. Fahrzeugkarosserieaufbau mit einer Karosserieversteifung hinter der zweiten Sitzreihe,
wobei die Karosserieversteifung aus einem Trägerverbund besteht, der aus zwei gegenüberliegenden Seitenlängsträgern (9, 10), einem Bodenquerträger (4) und zwei Seitenvertikalträgern (5, 6) gebildet ist, von denen jeweils ein linksseitiger Seitenlängsträger (9), ein zugeordnetes Ende des Bodenquerträgers (4) und ein linksseitiger Seitenvertikalträger (5) an einem linksseitigen Knotenpunkt (11) und entsprechend der zweite Seitenlängsträger (10) mit dem anderen Ende des Bodenquerträgers (4) und dem zweiten Seitenvertikalträger (10) an einem rechtsseitigen Knotenpunkt verbunden sind, und
wobei an den beiden Knotenpunkten Eckverstärkungen für eine verstärkte Aussteifung in der Querebene des Bodenquerträgers (4) und der Seitenvertikalträger (5, 6) angebracht sind,
**dadurch gekennzeichnet,**
**dass** die Seitenlängsträger (9, 10) Aluminiumguss-Seitenlängsträger sind, an denen jeweils am Knotenpunkt (11) eine Eckverstärkung als materialeinheitliches, kastenartig abragendes Eckverstärkungsprofil (13) ausgeformt und integriert ist, wobei
am Eckverstärkungsprofil (13) oben einerseits der zugeordnete Seitenvertikalträger (5, 6) und seitlich andererseits der Bodenquerträger (4) angeschlossen ist.

2. Fahrzeugkarosserieaufbau nach Anspruch 1, **dadurch gekennzeichnet, dass** jeweils ein Aluminiumguss-Seitenlängsträger ein zur Fahrzeuginnenseite liegendes Aluminiumguss-Trägerschalenteil (12) aufweist, an dem das Eckverstärkungsprofil als hohler, in den Fahrzeuginnenraum vorspringender Profilkasten (13) ausgeformt ist,
dass der Profilkasten (13) einer Eckgestalt folgend in Fahrzeuglängsrichtung gesehen eine dreieckige Grundform aufweist mit gegenüberliegenden dreieckartigen Kastenquerwänden (14, 15), einer Kastenoberwand (16), einer zur Fahrzeuginnenseite weisenden Kastenseitenwand (17) und einem konkav geformten Übergangsbereich (18), und
dass den Bereich der Kastenoberwand (16) mit einem Überlappungsstoß (24) formschlüssig übergreifend oder hintergreifend ein zur Fahrzeuginnenseite liegendes Seitenvertikalträger-Schalenteil (23) des Seitenvertikalträgers (5) angeschlossen ist und entsprechend den Bereich der Kastenseitenwand (17) mit einem Überlappungsstoß (22) formschlüssig übergreifend ein zur Fahrzeuginnenseite liegendes Bodenquerträger-Schalenteil (20) des Bodenquerträgers (4) angeschlossen ist.

3. Fahrzeugkarosserieaufbau nach Anspruch 1 oder 2, **dadurch gekennzeichnet, dass** der Bodenquerträger (4) oder zumindest ein Bodenquerträger-Schalenteil (20) und jeweils der Seitenvertikalträger (5, 6) oder zumindest ein Seitenvertikalträger-Schalenteil (23) aus Aluminiumblech hergestellt sind.

4. Fahrzeugkarosserieaufbau nach Anspruch 3, **dadurch gekennzeichnet, dass** die Trägerverbindungen mit dem Eckverstärkungsprofil (13) durch Kleben und/oder Nieten und/oder MIG-Schweißen und/oder FDS-Schrauben hergestellt sind.

5. Fahrzeugkarosserieaufbau nach einem der Ansprüche 1 bis 4, **dadurch gekennzeichnet, dass** der Trägerverbund bei einer Limousinen-Karosserie durch einen oberen Querträger (7) im Bereich einer Hutablage zu einem bodeneckverstärkten Torsionsring (3) geschlossen ist.

6. Fahrzeugkarosserieaufbau nach einem der Ansprüche 1 bis 4, **dadurch gekennzeichnet, dass** die Seitenvertikalträger (5, 6) des Trägerverbunds bei einer Kombifahrzeug-Karosserie Bestandteile von bis in den Dachbereich geführten C-Säulen sind.

## Claims

1. Vehicle body structure, comprising a body stiffener behind the second row of seats, the body stiffener consisting of a beam assembly formed from two opposing longitudinal side beams (9, 10), a floor crossbeam (4), and two vertical side beams (5, 6), of which respectively a left-side longitudinal side beam (9), an associated end of the floor crossbeam (4) and a left-side vertical side beam (5) are connected at a left-side joint (11), and accordingly the second longitudinal side beam (10) is connected to the other end of the floor crossbeam (4) and the second vertical side beam (10) at a right-side joint, and corner reinforcements being attached at the two joints, for a strengthened reinforcement in the transverse plane of the floor crossbeam (4) and the vertical side beams (5, 6), **characterised in that** the longitudinal side beams (9, 10) are cast aluminium longitudinal side beams on which a corner reinforcement configured as a corner reinforcing profile (13) made of uniform material and protruding in the shape of a box is formed and integrated at the respective joint (11), the associated vertical side beam (5, 6) being connected to the top of the corner reinforcing profile (13) and the floor crossbeam (4) being connected to the side of said corner reinforcing profile.

2. Vehicle body structure according to claim 1, **characterised in that** each cast aluminium longitudinal side beam comprises a cast aluminium beam shell part (12) which faces the inside of the vehicle and on which the corner reinforcing profile is formed as a hollow profiled box (13) which projects into the interior of the vehicle, **in that** the profiled box (13) has a triangular basic shape, when viewed in the vehicle longitudinal direction, according to a corner shape, and has opposing triangular transverse box walls (14, 15), a box top wall (16), a box side wall (17) facing towards the inner side of the vehicle, and a concave transition region (18), and **in that** a vertical side beam shell part (23) of the vertical side beam (5), which beam shell part faces the inside of the vehicle, is connected such as to overlap, in an interlocking manner, the region of the box top wall (16) with a lap joint (24) or such as to engage behind said region, and correspondingly a floor-crossbeam shell part (20) of the floor crossbeam (4), which shell part faces the inside of the vehicle, is connected such as to overlap, in an interlocking manner, the region of the box side wall (17) with a lap joint (22).

3. Vehicle body structure according to either claim 1 or claim 2, **characterised in that** the floor crossbeam (4) or at least a floor-crossbeam shell part (20) and each of the vertical side beams (5, 6) or at least a vertical-side-beam shell member (23) are made of aluminium sheet.

4. Vehicle body structure according to claim 3, **characterised in that** the beam connections having the corner reinforcing profile (13) are produced by gluing and/or riveting and/or MIG welding and/or FDS screws.

5. Vehicle body structure according to any of claims 1 to 4, **characterised in that** the beam assembly in a saloon body is closed by an upper crossbeam (7) in the region of a rear parcel shelf to form a floor corner-reinforced torsion ring (3).

6. Vehicle body structure according to any of claims 1 to 4, **characterised in that** the vertical side beams (5, 6) of the beam assembly in an estate car body are components of C-pillars which are guided as far as into the roof region.

## Revendications

1. Structure de carrosserie de véhicule automobile avec un renfort de carrosserie derrière la seconde rangée de sièges,
dans laquelle le renfort de carrosserie est constitué d'un assemblage de poutres, qui est formé de deux longerons latéraux opposés (9, 10), d'une traverse de fond (4) et de deux poutres verticales latérales (5, 6), dont respectivement un longeron latéral côté gauche (9), une extrémité correspondante de la traverse de fond (4) et une poutre verticale latérale côté gauche (5) sont reliés en un point d'assemblage côté gauche (11) et, de manière correspondante, le second longeron latéral (10) est relié à l'autre extrémité de la traverse de fond (4) et à la seconde poutre verticale latérale (10) en un point d'assemblage côté droit, et
dans lequel des renforts d'angle sont appliqués aux deux points d'assemblage pour renforcer la rigidité dans le plan transversal de la traverse de fond (4) et de la poutre verticale latérale (5, 6),
**caractérisée en ce que** :
les longerons latéraux (9, 10) sont des longerons latéraux en fonte d'aluminium, sur lesquels est formé et intégré, respectivement, au point d'assemblage (11), un renfort d'angle sous la forme d'un profilé de renfort d'angle (13) venu de matière se dressant en forme de caisse, dans laquelle :
au profilé de renfort d'angle (13) se raccordent au-dessus, d'une part, la poutre verticale latérale correspondante (5, 6) et, latéralement, d'autre part la traverse de fond (4).

2. Structure de carrosserie de véhicule automobile selon la revendication 1, **caractérisée en ce que** :
respectivement, un longeron latéral de fonte d'aluminium présente une partie de coque (12) de la poutre de fonte d'aluminium disposée sur le côté interne du véhicule automobile, sur laquelle partie le profilé de renfort d'angle se présente sous la forme d'une caisse profilée creuse faisant saillie dans l'espace interne du véhicule automobile,
la caisse profilée (13) d'une configuration d'angle présente ensuite une forme de base triangulaire observée dans la direction longitudinale du véhicule automobile avec des parois transversales triangulaires opposées (14, 15) de la caisse, une paroi supérieure (16) de la caisse, une paroi latérale (17) de la caisse tournée vers le côté intérieur du véhicule automobile et une zone de transition (18) de forme concave, et
une partie de coque (23) de la poutre verticale latérale (5) se trouvant du côté interne du véhicule automobile se raccorde à la zone de la paroi supérieure (16) de la caisse avec un joint à recouvrement (24) s'imbriquant avec adaptation de formes au-dessus ou au-dessous et, de manière correspondante, une partie de coque (20) de la traverse de fond (4) se trouvant du côté interne du véhicule se raccorde à la zone de la paroi latérale (17) de la caisse avec un joint de recouvrement (22) s'imbriquant avec adaptation de formes au-dessus.

3. Structure de carrosserie de véhicule automobile selon la revendication 1 ou la revendication 2, **caractérisée en ce que** la traverse de fond (4) ou au moins une partie de coque (20) de la traverse de fond et, respectivement, la poutre verticale latérale (5, 6) ou au moins une partie de coque (23) de la poutre verticale latérale sont constituées de tôle d'aluminium.

4. Structure de carrosserie de véhicule automobile selon la revendication 3, **caractérisée en ce que** les liaisons de poutres avec le profilé de renfort d'angle (13) sont réalisées par collage et/ou par rivetage et/ou par soudage MIG et/ou par vissage FDS.

5. Structure de carrosserie de véhicule automobile selon l'une quelconque des revendications 1 à 4, **caractérisée en ce que** l'assemblage de poutres dans une carrosserie de limousine est fermé par une traverse supérieure (7) dans la zone d'un dépôt de chapeau sur une bague de torsion (3) renforcée à l'angle de fond.

6. Structure de carrosserie de véhicule automobile selon l'une quelconque des revendications 1 à 4, **caractérisée en ce que** les poutres verticales latérales (5, 6) de l'assemblage de poutres dans une carrosserie de véhicule automobile mixte sont des composants de colonnes C guidées jusque dans la zone du toit.
